Europäisches Patentamt

European Patent Office

Office européen des brevets

(11) Publication number: **0 385 769**
**A2**

## EUROPEAN PATENT APPLICATION

(21) Application number: 90302172.3

(22) Date of filing: 01.03.90

(51) Int. Cl.5: **B29C 65/18, B29C 65/34,**
**B29C 65/48**

(30) Priority: 03.03.89 NZ 228207
11.05.89 NZ 229086
24.07.89 NZ 230055

(43) Date of publication of application:
05.09.90 Bulletin 90/36

(84) Designated Contracting States:
AT BE CH DE FR GB IT LI LU NL SE

(71) Applicant: **HI TECH FUSION LIMITED**
**43 Veronica Street**
**New Lynn, Auckland(NZ)**

(72) Inventor: **Hodgson, Thomas Clarence**
**14 Himalaya Crescent, Lynfield, Mt. Roskill**
**Auckland(NZ)**
Inventor: **Ganter, Maurey**
**76, Seymour Road**
**Glen Eden, Auckland(NZ)**

(74) Representative: **Tribe, Thomas Geoffrey et al**
**F.J. Cleveland & Company 40-43 Chancery**
**Lane**
**London WC2A 1JQ(GB)**

(54) **Bonding sheet materials together.**

(57) Sheets of materials (12,13,27,28) are bonded together by placing them into intimate contact, bringing them into a single composite assembly, such as a roll (14,30) and heating the assembly until at least one of the sheets reaches a temperature at which it will adhere to the adjacent sheet. If required, a powdered bonding agent may be applied to one sheet surface from a fluidised bed (20) of the bonding agent. Where one sheet is metal, the heat can be generated by passing an electric current through the metal. The electrical resistance of the metal sheet can be used as a measure of the sheet temperature.

Fig. 1

EP 0 385 769 A2

This invention relates to a method and apparatus for bonding sheet materials together.

In the past sheets of materials have been laminated together by bringing together the sheets, which were originally on separate rolls, passing them through some kind of welding or fusing assembly, and then winding the fused assembly onto a single roll. The sheets are fused together progressively along their length.

By the present invention, the sheets to be laminated together are placed together in intimate contact throughout their entire surface area, and bonded together over that entire area simultaneously.

According to a first aspect of the present invention a method of bonding sheets of material together includes the steps of bringing the sheets together into a single composite assembly, and heating the assembly until at least one of the sheets reaches a temperature at which it will adhere to the adjacent sheet.

Preferably, the composite assembly comprises a roll. Preferably, where one of the sheets of material is electrically conductive, the step of heating the assembly comprises passing a current through the conductive sheet to heat the assembly.

Alternatively, the step of heating the assembly may comprise placing the assembly in an oven, such as a microwave of infrared oven.

Preferably, the turns or folds of the composite assembly are separated from each other by a sheet of separating material, such as non-stick paper of high-melting-point plastics, so that the turns or folds do not weld to each other.

In a second aspect, the present invention broadly consists in a method of bonding an electrically conductive sheet to a non-conductive sheet, the method comprising the steps of placing the sheets together, and inducing a current within the conductive sheet to generate heat within the sheet until it reaches a bonding temperature.

In order to achieve a satisfactory bond it is necessary to raise the sheets to a high enough temperature, without exceeding a predetermined maximum temperature at any point throughout the composite assembly. It is one object of the present invention to measure and/or control the temperature of the sheets during the bonding process, without the introduction of extra temperature sensing apparatus within the assembly.

Therefore, according to a further aspect of the invention there is provided a method of bonding sheets of material together, including the steps of placing an electrically conductive sheet and a non-conductive sheet together in a composite assembly in intimate contact throughout the entire length thereof which is to be bonded together, heating the composite assembly to a temperature at which the sheets bond together, measuring the electrical resistance of the conductive sheet to deduce the mean temperature thereof and using the deduced temperature as a control of the heat causing the bonding. Conveniently, the heating of the composite assembly to cause the bonding is effected by causing an electric current to flow in the conductive sheet, the magnitude and duration of the heat-producing current being sufficient to heat the conductive sheet to bonding temperature.

The control of the heat-producing current may be of the magnitude and/or the duration thereof.

Preferably the heat-producing current is generated by a voltage difference applied across the ends of the conductive sheet. In this case the temperature may be deduced by measuring the voltage and current of said heat-producing current, deducing the electrical resistance of the conductive sheet from the voltage and current and using known temperature versus resistance characteristics to deduce the temperature.

Alternatively, the heat-producing current may be induced or otherwise generated in the conductive sheet and a separate current may be passed through said conductive sheet, the voltage and current of the separate current being used to deduce the temperature and control the heat-producing current.

The heat-producing current is conveniently a direct current and may be produced by applying a pre-set voltage to the sheet and measuring the current produced thereby as an indication of temperature.

The voltage is advantageously raised smoothly from zero at the onset of heating to the pre-set value thereof.

The temperature of the sheet may be measured relative to room temperature as a datum.

According to yet another aspect of the invention, there is provided apparatus for bonding sheets together in which an electrically conductive sheet and a non-conductive sheet are placed together in a composite assembly in intimate contact throughout the entire length thereof which is to be bonded together, including means for causing an electric current to flow in the conductive sheet, the magnitude and duration of the current being sufficient to heat the conductive sheet to a temperature at which the sheets bond together, electrical resistance measuring means for measuring the electrical resistance of the conductive sheet to deduce the mean temperature thereof, and a controller of the heat-producing current, the controller being set or controlled by a function of said electrical resistance.

Preferably the means for causing the heat-producing electric current to flow is a source of voltage difference applied across the ends of the conductive sheet. The heat-producing current may be a direct current.

In another aspect of the invention there is provided bonding apparatus for bonding two sheets of material together, including first feed apparatus to feed a first of said sheets, second feed apparatus to feed a second of said sheets, a fluidised bed generator to generate a fluidised bed of a powdered bonding agent, the fluidised bed generator being located relative to that face which is to be bonded of said second sheet so that particles of the bonding agent become attached thereto.

Preferably, the fluidised bed generator includes a fluidising upward flowing gas stream and/or an electrostatically charged body within the fluidised bed, to generate an electric charge on each bonding agent particle with the same polarity on each particle, whereby the bed becomes fluidised by mutual repulsion of the particles.

The electrostatically charged body may be a metal grid.

Where the second sheet is flexible, conveniently it passes beneath a roller positioned to dip into the fluidised bed, when the latter is generated.

Advantageously, an electrostatic charge generator is positioned adjacent the face to be bonded of the second sheet, to generate an electrostatic charge thereon of opposite polarity to the charge on the particles.

Preferably the electrostatic charge generator includes a high tension high frequency plasma bar.

Various embodiments of the invention are described, by way of example only, with reference to the accompanying drawings, in which:-

Figure 1 is a diagrammatic end elevation of bonding apparatus, according to the invention,

Figure 2 is a view at enlarged scale of part of Figure 1,

Figure 3 is a perspective view of an alternative embodiment to Figure 1, and

Figure 4 is a diagrammatic view of a control means for the apparatus shown in Figure 3.

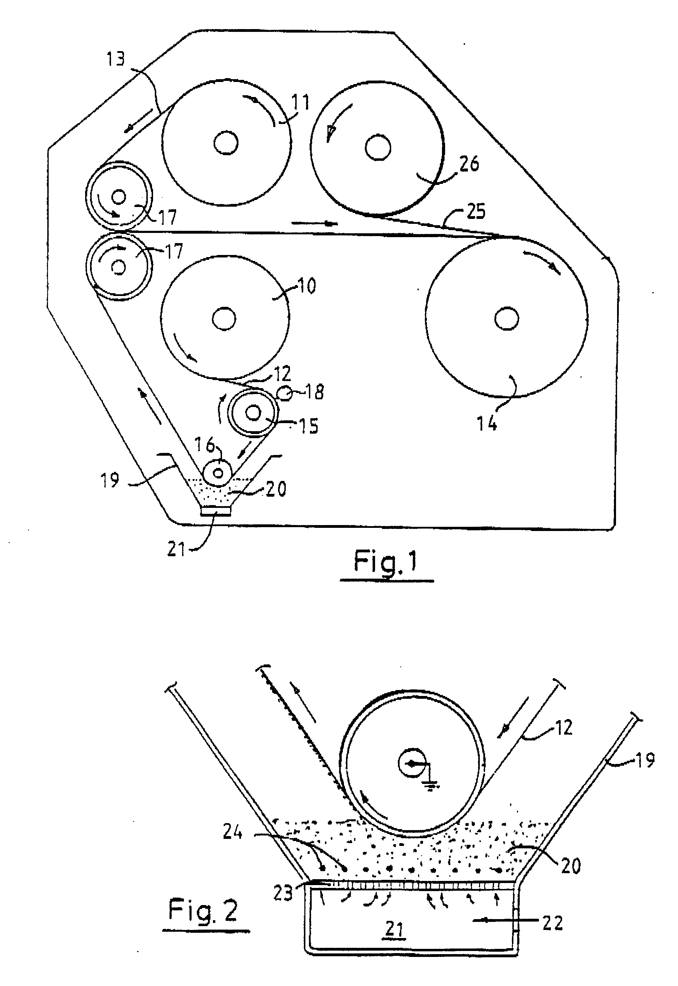

In Figure 1, a pair of supply reels 10, 11 each hold a stock of sheet material. The stock on reel 10 may be a plastics sheet, for example woven polyethylene 12 and the stock on reel 11 may be a co-polymer plastics sheet 13 or it may be metal, such as aluminium. The sheets 12, 13 are drawn off the reels 10, 11 at substantially the same linear speed by a wind-up roll 14. The sheet 12 passes from the reel 10 to the roll 14 over a plasma treatment roller 15, an earthed roller 16, and through the nip between a pair of press rollers 17, where it meets the sheet 13 being drawn off the reel 11.

The outer surface of the sheet 12, as it passes over the plasma treatment roller 15, is subject to a highly reactive plasma generated by a high tension, high frequency plasma bar 18. The plasma modifies the surface molecules on the polymeric sheet to produce an oxygen-rich surface layer in preparation for bonding the sheet 12 to the sheet 13.

The sheet 12 after leaving the plasma bar 18 carries a residual surface charge.

The earthed roller 16 is located in a trough 19 in which a fluidised bed 20 of very small particles of a thermo-setting co-polymer bonding agent is sustained by a stream of dried pressurised air entering a manifold 21 in the base of the trough 19 through an inlet 22 and rising through a plastics grid 23. In addition, or alternatively, the fluidised bed 20 may be sustained by electrostatic charge applied to a conductive grid 24. The grid 24 applies electrostatic charges to the particles in the fluidised bed, which thereby repel each other and, being arranged to have a charge of opposite polarity to the charge on the surface of the film 12, are attracted to that charged surface and adhere to it, so as to be carried into the nip between the rolls 17.

By virtue of the charge on each of the particles in the fluidised bed 20, they are mutually repellent and therefore spread uniformly over the surface of the film 12.

For some embodiments the press rollers 17 can be omitted and the sheets 12, 13 pass direct from the roller 16 and the reel 11 respectively to the wind-up roll 14. In order to prevent adjacent sheets in the roll 14 from becoming bonded together, a separating sheet 25 of paper or high-melting-point plastics may be drawn off a reel 26 at the same speed as the sheets 12, 13.

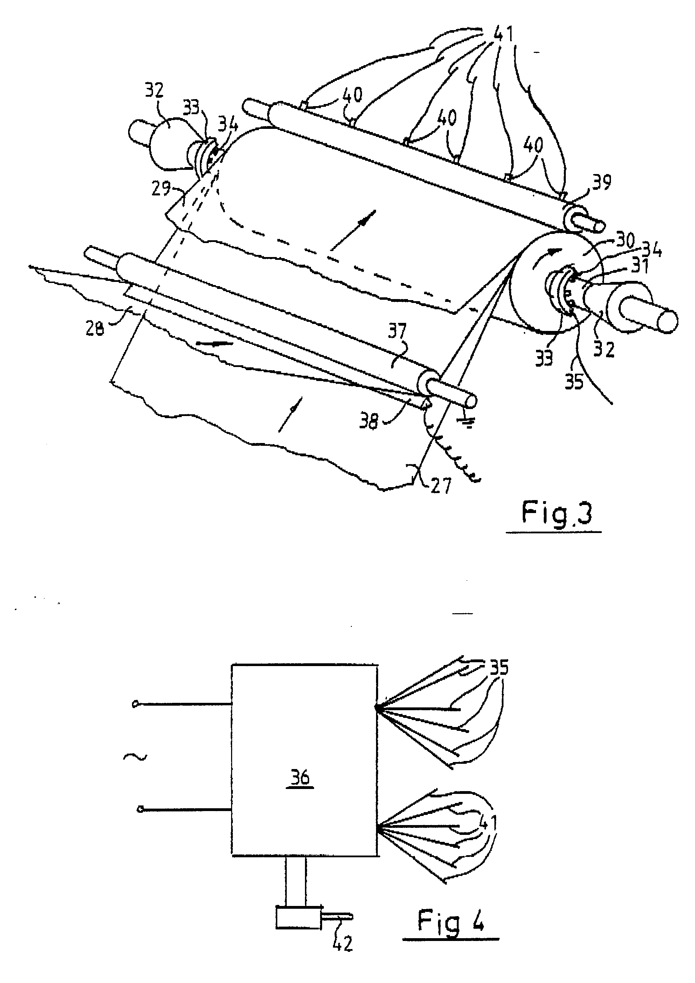

Figures 3 and 4 show a slightly different layout for winding the assembly of sheets onto the roll 14 and describe various methods of heating the assembly to bond the sheets together.

In Figure 3 a length of metal foil 27, typically aluminium, is to be welded over substantially the whole area thereof to plastics sheet 28 of comparable width and length thereto. In order that the metal foil 27 does not also weld to the plastics sheet 28 on the opposite side of the metal foil 27, a separating layer of paper 29 or other suitable material is provided. The metal foil 27, plastics sheet 28 and paper 29 are fed from unshown supply reels.

The three sheets 27, 28, 29 are wound together as a roll 30 on a tubular steel centre 31, which is located on and rotated by a pair of axially separable electrically insulated cones 32. At each end of the centre 31, a semi-circular brush holder 33 each holds three carbon brushes 34 whereby electric current can be fed to the roll centre 31. Each brush 34 is fed by a separate cable 35 from a power source 36, shown in Figure 2.

In use, a few turns of the metal foil 27 are first wound onto the centre 31, so as to ensure good electrical contact between the foil 27 and the centre 31. Then the plastics sheet 28 is wound on with the foil 27, and in intimate contact therewith. At the same time as the sheet 28 is wound on, the paper sheet 29 is also supplied, so that the underside of the metal foil 27 does not adhere to the upper face of the plastics sheet 28 adjacent thereto on the roll 30.

In order to assist intimate contact between the adjacent faces of the metal foil 27 and plastics sheet 28, the latter is given an electric charge. For this purpose the sheet 28 is passed between an earthed roller 37 and a sharp edged electrode bar 38, to which direct current is fed at typically 70/100 KV. When the roll 30 holds sufficient material, the supply of plastics sheet 28 and paper 29 is stopped and a few more turns of the metal foil 27 are wound on, so that the external surface of the roll 30 comprises entirely metal foil 27. During the winding of the roll 30, or subsequent thereto, an electrically insulated brass roller 39 is pressed against the material on the roll 30, eventually being pressed against the metal foil 27. Six evenly spaced carbon brushes 40 bear against the roller 39, each being fed by a separate cable 41 from the power supply 36.

The power supply 36 is fed with AC mains electricity, which may be single phase or three phase, as required. The power supply 36 converts the AC to DC, for example by a thyristor rectifier which is controlled so as to raise the DC voltage linearly from zero up to a pre-set value. This DC voltage produces a current through the cables 35, the brushes 34, the roll centre 31, the metal foil 27, the brass roller 39, the brushes 40 and the cables 41. Where the contents of the roll 30 are typically one thousand metres long, a maximum of four hundred volts DC will produce around 250 amps. This current heats up the foil 27 to a temperature at which the plastics sheet 28 fuses to it.

At regular intervals, typically every second, a computer means within the power source 36 samples the DC voltage and current and calculates therefrom the resistance of the circuit, most of which is attributable to the metal foil 27. The electrical resistance of the foil 27 will change in a substantially linear manner with the temperature thereof, and knowing the temperature versus resistance characteristic of the material of the foil 27, the mean temperature thereof can be deduced from the instantaneous resistance values. When the calculated resistance indicates that the required temperature of the foil 27 has been reached to achieve satisfactory bounding to the plastics film sheet 28, the DC voltage is reduced to zero to prevent overheating of the roll 30.

A temperature sensitive probe 42 feeds into the power source 36 a signal representative of ambient temperature, which is used as a datum from computing the temperature of the metal foil 27.

Instead of heating the metal foil 27 by means of a DC current passed therethrough, and monitoring the voltage and current thereof in order to deduce resistance and thus temperature, the metal foil 27 could be heated by electric currents induced in the foil 27 by alternating magnetic fields. Indeed, the heating of the roll 30 could be achieved by non-electrical means, such as an oven or the like, but in either case the mean temperature of the foil 27 can be measured by passing an electric current through the roll 30 from the cables 35 to the cables 41 and monitoring the change of resistance, as before.

Furthermore, the sheet materials 27, 28, 29 can be arranged other than in a roll 30. For instance, they could be looped tightly around a series of parallel bars, or packed into a Z-fold configuration.

In preferred, the heat-producing electric current and/or the current used to deduce the resistance, and therefore the temperature, of the foil 27 could be AC and may be of different frequencies.

## Claims

1 A method of bonding sheet materials together characterised by the steps of bringing the sheets (12,13,27,28) together into a single composite assembly (14,30) and heating the assembly until at least one of the sheets reaches a temperature at which it will adhere to the adjacent sheet.

2 A method according to claim 1, characterised by the step of winding the assembly as a roll (14,30) or looping the sheets in intimate contact tightly around a series of parallel bars, or packing the sheets in intimate contact into a Z-fold configuration.

3 A method according to claim 1 or 2 characterised by the step of separating the turns, loops or folds of the composite assembly from each other by a sheet of paper (25,29), high-melting-point plastics or other separating material, so that the turns, loops or folds do not weld to each other.

4 A method according to any of claims 1 to 3, wherein one of the sheets is electrically conductive, characterised by the step of causing an electric current to flow in the conductive sheet (13,17), the magnitude and duration of the heat-producing current being sufficient to heat the conductive sheet to a bonding temperature, by applying a voltage difference across the ends of the conductive sheet to generate the heat-producing current therein or by placing the assembly in an alternating magnetic field to induce the heat-producing current in the conductive sheet.

5 A method according to any of claims 1 to 3, characterised by the step of heating the assembly in an oven or by infra-red radiation up to bonding temperature.

6 A method according to any preceding claim wherein one of the sheets is electrically conductive, characterised by the steps of measuring the electrical resistance of the conductive sheet to deduce the mean temperature thereof, and using the deduced temperature as a control of the heat input to the assembly.

7 A method according to claim 4, characterised by the step of passing a separate current from the heat-producing current through the conductive sheet, the values of the voltage and current of the separate current being used to deduce the temperature and control the heat-producing current.

8 A method according to claim 4, characterised in that the heat producing current is a direct current of which the voltage is raised smoothly from zero at the onset of heating to a pre-set value thereof.

9 A method according to any preceding claim characterised by the step of applying an electric charge to one surface of one sheet which is an electrical insulator, in order to assist intimate contact with the adjacent face of the adjacent sheet.

10 A method according to claim 9, characterised by passing said one sheet between an electrode bar (18), facing said one surface, and an earthed roller (15), and applying a direct current to said electrode bar at 70 to 100KV.

11 A method according to claim 7 characterised in that one of said heat producing current and said separate current is direct current and the other of said currents is alternating current or said heat producing current and said separate current are both alternating currents of different frequencies.

12 A method, according to any preceding claim, characterised by the step of raising the temperature of one of said sheets until it approaches melting point thereof and thereby bonds to the adjacent sheet.

13 A method, according to any of claims 1 to 11, characterised the steps of applying a bonding agent (20) to one face of one of said sheets (12) before bringing the sheet together into the assembly and then heating the assembly until the bonding agent causes the sheets to adhere.

14 A method, according to claim 13, characterised by the step of generating a fluidised bed of a powdered bonding agent and causing the fluidised bonding agent to become attached to said one face of said one sheet.

15 Sheets of material bonded together by any of the methods of claims 1 to 14.

16 Bonding apparatus for bonding two sheets of material together, characterised by first feed apparatus (11) to feed a first of said sheets (13), second feed apparatus (10) to feed a second of said sheets (12), an accumulator means (14) to which said sheets are fed from the first and second feed apparatus and in which the sheets are held in intimate contact throughout their entire surface areas as an assembly, and heat generating means to heat the assembly to a temperature at which the sheets become bonded together.

17 Bonding apparatus, according to claim 16, for bonding said sheets of which one is electrically conductive, characterised by electrical connections to be connected to opposite ends of the electrically conductive sheet, electrical resistance measuring apparatus connected to said connections and control means of the heat generating means, the control means being responsive to the electrical resistance of said conductive sheet as indicating the mean temperature of the conductive sheet.

18 Bonding apparatus, according to claim 16 or 17, characterised by a fluidised bed generator (19,20) to generate a fluidised bed of a powdered bonding agent, the fluidised bed generator being located relative to that face of said second sheet (12) which is to be bonded so that particles of the bonding agent became attached thereto, and heating means to raise the assembly to a temperature at which the bonding agent causes the sheets to adhere.

Fig.1

Fig. 2

Fig.3

Fig 4